(19) Europäisches Patentamt / European Patent Office / Office européen des brevets

(11) **EP 3 945 103 B1**

## (12) FASCICULE DE BREVET EUROPEEN

(45) Date de publication et mention
de la délivrance du brevet:
**23.11.2022 Bulletin 2022/47**

(21) Numéro de dépôt: **21187884.8**

(22) Date de dépôt: **27.07.2021**

(51) Classification Internationale des Brevets (IPC):
***C08G 69/14*** *(2006.01)*     ***C08G 69/26*** *(2006.01)*

(52) Classification Coopérative des Brevets (CPC):
**C08G 69/08; C08G 69/14; C08G 69/26**

(54) **POLYAMIDE POUR UNE APPLICATION TEXTILE**

POLYAMID FÜR TEXTILE ANWENDUNGEN

POLYAMIDE FOR TEXTILE APPLICATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.07.2020 FR 2008016**

(43) Date de publication de la demande:
**02.02.2022 Bulletin 2022/05**

(73) Titulaire: **ARKEMA FRANCE
92700 Colombes (FR)**

(72) Inventeurs:
• **CASSIANO GASPAR, Stefania
27470 SERQUIGNY (FR)**
• **BRIFFAUD, Thierry
27470 SERQUIGNY (FR)**
• **FLAT, Jean-Jacques
27470 SERQUIGNY (FR)**
• **DANG, Patrick
27470 SERQUIGNY (FR)**

(74) Mandataire: **Bandpay & Greuter
30, rue Notre-Dame des Victoires
75002 Paris (FR)**

(56) Documents cités:
**WO-A1-2010/086546     WO-A1-2017/174949**

**Description**

[DOMAINE DE L'INVENTION

La présente invention concerne un polyamide présentant des propriétés améliorées dans le domaine du textile. L'invention porte également sur son procédé de préparation et sur son utilisation pour fabriquer un matériau textile.

ARRIERE-PLAN TECHNIQUE

L'utilisation de fibres textiles synthétiques à base de polyamide est connue depuis de très nombreuses années. Parmi les textiles, on trouve notamment des mats de fibres (pansements, filtres, feutre), des mèches (pansements), des fils (fils à coudre, fils à tricoter, fils à tisser), des tricots (rectilignes, circulaires, "fullyfashioned" ou façonnés), des tissus (tissu traditionnel, tissu Jacquard, tissu multiple, tissu double face, tissu multiaxial, tissu 2D et demi, tissu 3D) et bien d'autres. Des innovations dans ce domaine apparaissent régulièrement, comme par exemple pour des vêtements de sport, qui permettent une plus facile élimination de la sueur. Des innovations sur la capacité des fibres à être teintes sont également récemment apparues. Ainsi, lorsque que les matériaux textiles sont traités pour conférer une couleur, une forme particulière ou bien un traitement spécifique, tel qu'un traitement antibactérien ou ignifugeant, le matériau textile peut être soumis à plusieurs étapes de traitements et/ou à des traitements plus durs, rendant les fibres plus fragiles.

Par ailleurs, au regard des enjeux climatiques actuels, il est recherché des matériaux textiles pouvant être totalement recyclés.

Ainsi, il est recherché de nouveaux matériaux plus résistants, que ce soit une résistance thermique ou une résistance mécanique, et qui présentent l'avantage de pouvoir être recyclés.

RESUME DE L'INVENTION

L'invention porte sur un polyamide aliphatique linéaire obtenu par polycondensation d'au moins un motif aliphatique linéaire choisi parmi un acide alpha,omega-aminocarboxylique en C6 à C12, un lactame en C6 à C12 et une unité (diamine en Ca).(diacide en Cb), avec a représentant le nombre d'atomes de carbone de la diamine et b représentant le nombre de carbone du diacide, a et b étant compris entre 4 et 18, le polyamide présentant

- une différence, exprimée en valeur absolue, entre son acidité totale et sa basicité totale compris entre 35 et 180, et
- une basicité totale ou une acidité totale strictement inférieure à 35 $\mu$eq/g, lorsque la basicité totale est strictement inférieure à 35 $\mu$eq/g, alors l'acidité totale est comprise entre 70 et 180 $\mu$eq/g, ou

lorsque l'acidité totale est strictement inférieure à 35 $\mu$eq/g, alors la basicité totale est comprise entre 60 et 180 $\mu$eq/g, le polyamide étant limité par un monoacide carboxylique linéaire aliphatique en C2-C18, une monoamine linéaire aliphatique en C4-C18, un diacide carboxylique linéaire aliphatique en C3-C36, et/ou une diamine linéaire aliphatique en C4-C18.

L'invention porte également sur le procédé de préparation de ce polyamide.

L'invention porte aussi sur une composition comprenant ledit polyamide.

Enfin, l'invention porte sur un matériau textile fabriqué à partir du polyamide ou bien de la composition le contenant.

Il a été observé que le polyamide selon l'invention présentait d'excellentes propriétés de stabilité thermique et d'excellentes propriétés mécaniques. Il présente également une excellente stabilité rhéologique. Cela signifie, qu'il évolue très peu à chaud. En d'autres termes, lorsqu'il est fondu pour la fabrication d'un filament, sa viscosité évolue très peu. Cette propriété est très recherchée par les fabricants. En effet, lorsque par exemple la chaîne de production doit être arrêtée pour une raison quelconque, comme par exemple une panne sur la ligne de production, celle-ci peut être redémarrée sans perte de la matière en cours de fabrication. La matière fondue aura peu, voire pas évoluée pendant cette interruption, et les filaments produits, au cours de cet arrêt auront les spécificités requises. Aucune perte ne sera constatée.

De plus, le polyamide selon l'invention présente l'avantage de pouvoir être recyclé. Sa stabilité rhéologique lui permet d'être aisément refondu et réutilisé par fabriquer de nouveau filaments. La propriété du polyamide refondu est très proche, voire identique à celles d'un polyamide fondu pour la première fois.

DESCRIPTION DE MODES DE REALISATION DE L'INVENTION

D'autres caractéristiques, aspects, objets et avantages de la présente invention apparaîtront encore plus clairement à la lecture de la description qui suit.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Il est par ailleurs précisé que les expressions "compris entre... et..." et "de... à..." utilisées dans la présente description doivent s'entendre comme incluant chacune des bornes mentionnées.

Le mot « polyamide » couvre à la fois les homopolyamides et les copolyamides.

Dans la présente description de l'invention, on entend :

- par "matériau textile" ou "textile", tout matériau réalisé à partir de fibres ou de filaments ainsi que tout matériau formant une membrane poreuse caractérisée par un rapport longueur/épaisseur d'au moins 300 ;

- par "fibre", toute matière synthétique ou naturelle, caractérisée par un rapport longueur/diamètre d'au moins 300 ;

- par "filament", toute fibre de longueur infinie.

L'invention est maintenant décrite plus en détails et de façon non limitative dans la description qui suit.

Polyamide

Le polyamide selon l'invention est obtenu par polycondensation d'au moins un motif aliphatique linéaire choisi parmi un acide alpha,omegaaminocarboxylique en C6 à C12, un lactame en C6 à C12 et une unité (diamine en Ca).(diacide en Cb), avec a représentant le nombre d'atomes de carbone de la diamine et b représentant le nombre de carbone du diacide, a et b étant compris entre 4 et 18.

Le polyamide selon l'invention peut être obtenu par polycondensation d'au moins un lactame choisi parmi la pyrrolidinone, la 2-pipéridinone, l'énantholactame, le caprylolactame, le pelargolactame, le décanolactame, l'undecanolactame, et le lauryllactame.

Le polyamide selon l'invention peut également être obtenu par polycondensation d'au moins un aminoacide choisi parmi l'acide 10-aminodécanoïque (noté 10), l'acide amino-11-undécanoïque (noté 11), l'acide amino-12-dodécanoïque (noté 12).

Le polyamide peut être obtenu par polycondensation d'au moins un motif répondant à la formule (diamine en Ca). (diacide en Cb), avec a représentant le nombre d'atomes de carbone de la diamine et b représentant le nombre de carbone du diacide, a et b étant compris entre 4 et 18.

Le motif (diamine en Ca) peut être choisi parmi la butanediamine (a=4), la pentanediamine (a=5), l'hexanediamine (a=6), l'heptanediamine (a=7), l'octanediamine (a=8), la nonanediamine (a=9), la décanediamine (a= 10), l'undécanediamine (a= 11), la dodécanediamine (a= 12), la tridécanediamine (a= 13), la tetradécanediamine (a= 14), l'hexadécanediamine (a= 16), l'octadécanediamine (a= 18).

Le motif (diacide en Cb) peut être choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b= 10), l'acide undécanedioïque (b= 11), l'acide dodécanedioïque (b= 12), l'acide brassylique (b= 13), l'acide tetradécanedioïque (b= 14), l'acide hexadécanedioïque (b= 16), l'acide octadécanedioïque (b= 18).

Selon un mode de réalisation préféré, le polyamide selon l'invention est un homopolyamide. Cet homopolyamide peut être obtenu par la polycondensation d'un lactame, d'un aminoacide ou d'un motif (diamine en Ca).(diacide en Cb), avec Ca et Cb étant tels que définis ci-dessus.

De préférence, le polyamide selon l'invention est un homopolyamide aliphatique linéaire obtenu par polycondensation d'un motif aliphatique linéaire choisi parmi un acide alpha, omegaaminocarboxylique en C6 à C12, un lactame en C6 à C12 et une unité (diamine en Ca).(diacide en Cb), avec a représentant le nombre d'atomes de carbone de la diamine et b représentant le nombre de carbone du diacide, a et b étant compris entre 4 et 18, le polyamide présentant

- une différence, exprimée en valeur absolue, entre son acidité totale et sa basicité totale compris entre 35 et 180 et

- une basicité totale ou une acidité totale étant strictement inférieure à 35 $\mu$eq/g.

De manière encore plus préférée, le polyamide selon l'invention est un homopolyamide aliphatique linéaire obtenu par polycondensation d'un motif aliphatique linéaire choisi parmi un acide alpha,omegaaminocarboxylique en C8 à C12, un lactame en C8 à C12 et une unité (diamine en Ca).(diacide en Cb), avec a représentant le nombre d'atomes de carbone de la diamine et b représentant le nombre de carbone du diacide, a et b étant compris entre 8 et 12, le polyamide présentant

- une différence, exprimée en valeur absolue, entre son acidité totale et sa basicité totale compris entre 35 et 180 et

- une basicité totale ou une acidité totale étant strictement inférieure à 35 µeq/g.

Avantageusement, l'homopolyamide selon l'invention est choisi parmi PA11, PA12, PA1010, PA 1012, plus particulièrement le PA11. Le PA11 est obtenu par polycondensation de l'acide amino-11-undécanoïque. Le PA12 est obtenu par polycondensation du lauryllactame. Le PA1010 est obtenu par polycondensation de la décanediamine et de l'acide décanedioïque. Le PA1012 est obtenu par polycondensation de la décanediamine et de l'acide dodécanedioïque.

Le PA11 présente l'avantage d'être fabriqué à partir de matières premières d'origine végétale. Les matières végétales peuvent être cultivées en grande quantité, selon la demande, sur la majeure partie du globe terrestre et d'être bio-ressourcées. Une matière première bio-ressourcée est une ressource naturelle, animale ou végétale, dont le stock peut se reconstituer sur une période courte à l'échelle humaine. Il faut en particulier que ce stock puisse se renouveler aussi vite qu'il est consommé.

La matière première de base du PA11 est l'huile de ricin ("Castor oil" en anglais), extraite de la plante du même nom (le Ricin commun), à partir des graines de ricin. Le PA11 est obtenu par polycondensation de l'acide amino-11-undécanoïque.

Selon un autre mode de réalisation, le polyamide est un copolyamide aliphatique linéaire obtenu par polycondensation d'au moins deux monomères de structures différentes, de formule A/B dans laquelle

le motif A est choisi parmi un acide alpha,omega-aminocarboxylique en C6 à C12, un lactame en C6 à C12 et une unité (diamine en Ca).(diacide en Cb), avec a représentant le nombre d'atomes de carbone de la diamine et b représentant le nombre de carbone du diacide, a et b étant compris entre 4 et 18,

le motif B est choisi parmi un acide alpha,omega-aminocarboxylique en C6 à C12, un lactame en C6 à C12 et une unité (diamine en Ca).(diacide en Cb), avec a représentant le nombre d'atomes de carbone de la diamine et b représentant le nombre de carbone du diacide, a et b étant compris entre 4 et 18,

A et B étant de structure différente, le polyamide présentant

- une différence, exprimée en valeur absolue, entre son acidité totale et sa basicité totale compris entre 35 et 180 et

- une basicité totale ou une acidité totale étant strictement inférieure à 35 µeq/g.

De préférence, le motif A est choisi parmi un acide alpha,omegaaminocarboxylique en C8 à C12, un lactame en C8 à C12 et une unité (diamine en Ca).(diacide en Cb), avec a représentant le nombre d'atomes de carbone de la diamine et b représentant le nombre de carbone du diacide, a et b étant compris entre 8 et 12, le motif B est choisi parmi un acide alpha,omega-aminocarboxylique en C8 à C12, un lactame en C8 à C12 et une unité (diamine en Ca).(diacide en Cb), avec a représentant le nombre d'atomes de carbone de la diamine et b représentant le nombre de carbone du diacide, a et b étant compris entre 8 et 12.

De préférence, le polyamide est choisi parmi PA11/1010, PA11/1012, PA11/1212, PA1010/1012, PA1010/1212, PA12/1010, PA 12/1012, PA12/1212.

Acidité totale et basicité totale

Le polyamide selon l'invention présente une différence, exprimée en valeur absolue, entre son acidité totale et sa basicité totale comprise entre 35 et 180.

Par différence, exprimée en valeur absolue, on entend au sens de la présente invention, le résultat de la soustraction des valeurs de l'acidité totale et de la basicité totale, sans tenir compte du signe.

De préférence, la différence, exprimée en valeur absolue, entre l'acidité totale et la basicité totale est comprise entre 40 et 110.

Le polyamide selon l'invention présente également une basicité totale ou une acidité totale strictement inférieure à 35 µeq/g.

L'acidité et la basicité sont mesurées par potentiométrie.

L'acidité est mesurée selon la méthode suivante. Un échantillon de polyamide est dissout dans de l'alcool benzylique. Puis, cet échantillon est dosé par potentiométrie par une solution d'hydroxyde de tétrabutylammonium à 0.02N.

La basicité est mesurée selon la méthode suivante. Un échantillon de polyamide est dissout dans du métacrésol. Puis, cet échantillon est dosé par potentiométrie par une solution d'acide perchlorique 0.02N.

Selon un mode de réalisation de l'invention, le polyamide présente une basicité totale strictement inférieure à 35 µeq/g et une acidité totale comprise entre 70 et 180 µeq/g.

De préférence, le polyamide présente une acidité totale comprise entre 75 à 130 µeq/g. De préférence, le polyamide présente une basicité totale inférieure ou égale à 30 µeq/g, et plus particulièrement comprise entre 5 et 30 µeq/g.

Selon un mode de réalisation de l'invention, le polyamide présente une acidité totale est strictement inférieure à 35 µeq/g et une basicité totale comprise entre 60 et 180 µeq/g, de préférence entre 60 à 130 µeq/g.

De préférence, le polyamide présente une basicité totale comprise entre 60 à 130 µeq/g. De préférence, le polyamide présente une acidité totale inférieure ou égale à 30 µeq/g, et plus particulièrement comprise entre 5 et 25 µeq/g.

Selon un mode de réalisation préféré, l'homopolyamide selon l'invention est le PA11 ou le PA12, présentant une acidité totale comprise entre 75 et 130 µeq/g et une basicité totale comprise entre 5 et 30 µeq/g.

## Viscosité inhérente

De préférence, le polyamide selon l'invention présente une viscosité inhérente comprise entre 0,70 et 1,70, avantageusement comprise entre 0,70 et 1,50, de préférence entre 0,80 à 1,20, plus particulièrement encore entre 0,85 et 1,15.

La viscosité inhérente est mesurée à une concentration en polyamide de 0,5% en poids en solution dans du métacrésol sur le poids total de la solution, à 20°C, au moyen d'un viscosimètre équipé d'un tube viscosimétrique Micro-Ubbelohde.

## Taux de cristallinité

De préférence, le polyamide présente un taux de cristallinité compris entre 20 et 40%, notamment entre 20 et 30%, mesuré par DSC (mesure de la calorimétrie différentielle à balayage) selon la norme 11357-3, 1999 (2nd chauffe de DSC à 20°C/min selon la norme ISO 11357). Le taux de cristallinité se calcule selon la formule suivante :

$$\chi = \frac{\Delta Hf *}{\Delta Hf} \times 100$$

dans laquelle

χ désigne le taux de cristallinité,
$\Delta H_f$* désigne l'enthalpie de fusion du polyamide
$\Delta H_f$ désigne l'enthalpie de fusion du polyamide 100% cristallin. Cette valeur peut être une valeur théorique obtenue par des modèles mathématiques, ou bien si l'échantillon est disponible, il s'agit de la valeur mesurée sur cet échantillon.

## Limiteurs de chaînes

Le polyamide selon l'invention est limité par un monoacide carboxylique linéaire aliphatique en C2-C18, une monoamine linéaire aliphatique en C4-C18, un diacide carboxylique linéaire aliphatique en C3-C36 et/ou une diamine linéaire aliphatique en C4-C18.

L'acide utilisé en tant que limiteur de chaîne peut être choisi parmi l'acide acétique, l'acide propionique, l'acide lactique, l'acide valérique, l'acide caproïque, l'acide caprique, l'acide laurique, l'acide tridécylique, l'acide myristique, l'acide palmitique, l'acide stéarique, l'acide pivalique, l'acide isobutyrique, l'acide succinique, l'acide pentanedioïque, l'acide adipique, l'acide heptanedioïque, l'acide octanedioïque, l'acide azélaïque, l'acide sébacique, l'acide undécanedioïque, l'acide dodécanedioïque, l'acide brassylique, l'acide tetradécanedioïque, l'acide hexadécanedioïque, l'acide octadécanedioïque, l'acide octadécènedioïque, l'acide eicosanedioïque et l'acide docosanedioïque.

De préférence, le polyamide selon l'invention est limité par un monoacide carboxylique linéaire aliphatique en C6-C12 et/ou un diacide carboxylique linéaire aliphatique en C6-C12, et de manière particulièrement préférée par un diacide carboxylique linéaire aliphatique en C6-C12. Les acides préférés sont l'acide adipique, l'acide sébacique et l'acide laurique.

L'amine utilisée en tant que limiteur de chaîne peut être choisie parmi la butylamine, l'héxylamine, l'octylamine, la décylamine, la laurylamine, la stéarylamine, la diéthylamine, la dipropylamine, la dibutylamine, l'hexanediamine, l'heptanediamine, l'octanediamine, la nonanediamine, la décanediamine, l'undécanediamine, la dodécanediamine.

De préférence, le polyamide selon l'invention est limité par une monoamine en C6-C12 et/ou une diamine en C6-C12. De préférence, la décanediamine et la laurylamine sont utilisées.

Selon un mode particulièrement préféré de l'invention, le polyamide est obtenu par polycondensation d'au moins un motif aliphatique linéaire choisi parmi un acide alpha,omega-aminocarboxylique en C6 à C12, un lactame en C6 à C12 et une unité (diamine en Ca).(diacide en Cb), avec a représentant le nombre d'atomes de carbone de la diamine et b représentant le nombre de carbone du diacide, a et b étant compris entre 4 et 18, le polyamide présentant

- une différence, exprimée en valeur absolue, entre son acidité totale et sa basicité totale compris entre 35 et 180,

- une basicité totale strictement inférieure à 35 $\mu$eq/g et

- une acidité totale comprise entre 70 et 180 $\mu$eq/g,

le polyamide étant limité par un monoacide ou un diacide.

De préférence, le polyamide est un homopolyamide obtenu par polycondensation d'un motif aliphatique linéaire choisi parmi un acide alpha,omega-aminocarboxylique en C6 à C12 et un lactame en C6 à C12 le polyamide présentant

- une différence, exprimée en valeur absolue, entre son acidité totale et sa basicité totale compris entre 35 et 180,

- une basicité totale strictement inférieure à 35 $\mu$eq/g et

- une acidité totale comprise entre 70 et 180 $\mu$eq/g,

le polyamide étant limité par un monoacide ou un diacide.

## Procédé de préparation

Le procédé de préparation du polyamide selon l'invention comprend une étape de mélange des monomères à l'étape fondu, et d'au moins un agent de terminaison de chaîne, d'eau et éventuellement d'autres additifs. Cette étape est généralement réalisée à une température comprise entre 100 et 300°C, et sous une pression comprise entre 3 et 35 bars. Cette étape peut être réalisée en batch ou en continu.

Puis, la vapeur d'eau est éliminée par dégazage et la pression est redescendue, jusqu'à ce que la pression atmosphérique soit atteinte.

Enfin, la polycondensation se poursuit sous azote ou sous vide jusqu'à l'obtention du poids moléculaire souhaité.

Le procédé peut également comprendre une étape de filtration ultérieure afin de s'assurer que le polyamide comporte peu d'impuretés. Par exemple, l'étape de filtration peut être effectuée lors d'une étape de compoundage supplémentaire.

L'ajout d'additifs peut être effectué lors de la polymérisation des monomères ou bien lors d'une étape de compoundage supplémentaire.

## Composition

L'invention a également pour objet une composition comprenant le polyamide tel que défini ci-dessus.

La composition peut comporter au moins un additif choisi parmi des ignifugeants, des agents protecteurs contre les UV, des stabilisants aux UV, des azurants optiques, des stabilisants thermiques, des pigments, des lubrifiants, des agents antioxydants, des agents d'amélioration de la fluidité, des agents d'amélioration de la coulabilité, des agents filmogènes, des charges, des auxiliaires de filmification, des gommes, des polymères semi-cristallins, des conservateurs, des agents anti-bactériens et leurs mélanges.

De préférence, la composition comprend majoritairement, c'est-à-dire au moins 50% en poids par rapport au poids total de la composition de polyamide, et de préférence entre 70 et 90%.

Selon un mode de réalisation préféré, la composition selon l'invention comprend le polyamide selon l'invention et au plus 10% en poids par rapport au poids total de la composition d'au moins un additif.

Selon un mode de réalisation préféré, la composition selon l'invention comprend, en tant que polyamide, le PA11 ou le PA12, le polyamide présentant

- une différence, exprimée en valeur absolue, entre son acidité totale et sa basicité totale compris entre 35 et 180,

- une basicité totale strictement inférieure à 35 $\mu$eq/g et

EP 3 945 103 B1

- une acidité totale comprise entre 70 et 180 μeq/g,

  le polyamide étant limité par un diacide carboxylique linéaire aliphatique en C6-C12, et de préférence par l'acide adipique,

  et au plus 10% en poids par rapport au poids total de la composition d'au moins un additif.

Selon un mode de réalisation préféré, la composition selon l'invention comprend, en tant que polyamide, le PA11 ou le PA12, le polyamide présentant

- une différence, exprimée en valeur absolue, entre son acidité totale et sa basicité totale compris entre 35 et 180,

- une acidité totale strictement inférieure à 35 μeq/g et

- une basicité totale comprise entre 60 et 180 μeq/g,

  le polyamide étant limité par une amine linéaire aliphatique en C6-C12, et de préférence par la décanediamine et la laurylamine,

  et au plus 10% en poids par rapport au poids total de la composition d'au moins un additif.

Utilisations

Le polyamide selon l'invention peut être utilisé pour la fabrication de matériau textile, tels que des fils, fibres, filaments, films, membranes, membranes poreuses, textiles tissés ou non tissés. La présente invention concerne aussi la fabrication et l'utilisation de particules de polyamide fondues pour les faire adhérer à la surface de matériaux textiles de façon durable (résistance aux lavages).

La composition telle que définie ci-dessus peut également être utilisée pour la fabrication de matériau textile, tels que des fils, fibres, filaments, films, membranes, membranes poreuses, textiles tissés ou non tissés.

Le polyamide ou les compositions à base de polyamide peuvent être mis(es) en forme de matériau textile directement après la polymérisation, sans étapes intermédiaires de solidification et de refonte. Le polyamide ou ces compositions peuvent aussi être mis(es) en forme de granulés, destinés à subir une refusion pour une mise en forme définitive ultérieure, par exemple pour la fabrication d'articles textiles moulés ou pour la fabrication de fils, fibres et/ou filaments.

Tous les procédés de filage en fondu peuvent être utilisés notamment en faisant passer le polyamide ou la composition de l'invention à travers des filières comprenant un ou plusieurs orifices. Pour la fabrication de fils multifilamentaires, on cite les procédés de filage ou filage-étirage ou filage-étirage-texturation intégrés ou non, quelle que soit la vitesse de filage. On peut produire les fils par filage haute vitesse, à vitesse de filage supérieure ou égale à 3000 m/min, préférentiellement supérieure ou égale à 4000 m/min. De tels procédés sont souvent désignés par les termes suivants : POY (partialy oriented yarn), FOY (fully oriented yarn), FEI (filage-étirage-intégré), HOY (higly oriented yarn avec une vitesse supérieure à 5500 m/min). Ces fils peuvent de plus être texturés, selon l'usage auquel ils sont destinés. Les fils obtenus par ces procédés conviennent tout particulièrement à la réalisation de surfaces textiles, tissées ou tricotées. Selon l'invention, la matrice polymérique thermoplastique en polyamide selon l'invention peut être utilisée pour la fabrication de fils monofilamentaires ou monofilaments, de fils multifilamentaires ou multifilaments, de fibres continues (en bobines) et/ou de fibres discontinues (coupées). Les fibres discontinues de l'homopolyamide conviennent particulièrement bien pour le mélange avec des fibres naturelles.

Pour les fibres individuelles ou monofilaments, les titres peuvent aller de 1,5dtex à 100dtex/filament, les titres élevés étant particulièrement bien adaptés pour les applications industrielles. Les fils multifilamentaires ont de préférence un titre inférieur ou égal à 6 dtex/filament. Pour la fabrication de fibres, les filaments peuvent par exemple être réunis sous forme de mèche ou de nappe, directement après le filage ou en reprise, étirés, texturés ou frisés et coupés. Les fibres obtenues peuvent être utilisées pour la fabrication de non tissés ou de filés de fibres. Le polyamide ou les compositions peuvent également être utilisé(es) pour la fabrication de flocs. Les fils, fibres et/ou filaments de l'invention peuvent subir divers traitements tels que, par exemple, l'étirage en une étape continue ou en reprise, le dépôt d'ensimage, l'huilage, l'entrelacement, la texturation, le frisage, l'étirage, le traitement thermique de fixation ou de relaxation, le moulinage, le retordage et/ou la teinture. Pour la teinture, on cite en particulier les procédés de teinture en bain ou par jets. Les teintures préférées sont les teintures acides, métallifères ou non métallifères.

Dans un mode de réalisation, la ténacité d'un filament d'un polyamide de l'invention est supérieure à 3,5 cN/dTex, en particulier supérieure à 4 cN/dTex, en particulier elle est comprise de 4 à 10 cN/dTex.

L'invention a également pour objet un filament constitué de polyamide tel que défini ci-dessus ou constitué de la composition telle que définie ci-dessus.

Textile

L'invention a également pour objet un textile fabriqué à partir de polyamide ou de la composition définie ci-dessus.

La présente invention concerne aussi un textile (ou article textile ou matériau textile) obtenu au moins partiellement à partir du polyamide défini précédemment, se présentant sous forme de fils, fibres et/ou filaments tel que définis précédemment. Ces matériaux ou articles textiles peuvent être des étoffes ou des surfaces textiles, telles que des surfaces tissées, tricotées, non-tissées ou tapis. De tels articles peuvent être, par exemple, des moquettes, des tapis, des revêtements d'ameublement, des revêtements de surface tels que les revêtements destinés aux canapés, des rideaux, de la literie, des matelas et oreillers, des vêtements et des matériaux textiles médicaux.

Le textile selon l'invention constitue avantageusement un feutre, un filtre, un film, une gaze, une toile, un pansement, une couche, un tissu, un tricot, un article d'habillement, un vêtement, un article de literie, un article d'ameublement, un rideau, un revêtement d'habitacle, un textile technique fonctionnel, un géotextile et/ou un agrotextile.

Ledit textile est avantageusement utilisé dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

La présente invention concerne aussi des articles textiles obtenus par mise en forme d'une matrice de polyamide ou d'une composition thermoplastique comprenant le polyamide selon l'invention par un procédé d'extrusion notamment par voie fondue, en particulier l'extrusion de feuilles, de films et de filaments. Des films peuvent ainsi être obtenus par les procédés mentionnés précédemment en utilisant une filière plate. Les films obtenus peuvent subir une ou différentes étapes de traitements, telles qu'un étirage unidimensionnel ou bidimensionnel, un traitement thermique de stabilisation, un traitement antistatique et/ou un ensimage.

Lorsque les textiles selon l'invention sont fabriqués majoritairement à base d'un PA11 selon l'invention (comprenant au moins 50% en masse de PA11), alors ces textiles présentent d'autres propriétés avantageuses. Ils sont légers, souples, au toucher doux, ils résistent à la déchirure, à la coupure, à l'abrasion, au boulochage, et ils présentent un premier contact froid.

Avantageusement, ledit textile comprend en outre des fibres naturelles telles que du coton, de la laine et/ou de la soie, des fibres artificielles fabriquées à partir de matières premières naturelles, des fibres métalliques et/ou des fibres synthétiques autres que des fibres de polyamide selon l'invention.

Avantageusement, ledit textile comprend des fibres synthétiques obtenues à partir de matières premières bio-ressourcées. De préférence, le textile selon l'invention est fabriqué uniquement à partir de matières premières bio-ressourcées.

Par matières premières d'origine renouvelable ou matières premières bio-ressourcées, on entend des matériaux qui comprennent du carbone bio-ressourcé ou carbone d'origine renouvelable. En effet, à la différence des matériaux issus de matières fossiles, les matériaux composés de matières premières renouvelables contiennent du $^{14}C$. La "teneur en carbone d'origine renouvelable" ou "teneur en carbone bioressourcé" est déterminée en application de la norme ASTM D 6866 (ASTM D 6866-06) et, le cas échéant, de la norme ASTM D 7026 (ASTM D 7026-04). La première norme décrit un test de mesure du ratio 14C/12C d'un échantillon et le compare avec le ratio $^{14}C/^{12}C$ d'un échantillon référence d'origine 100% bioressourcé, pour donner un pourcentage relatif de C bioressourcé dans l'échantillon. La norme est basée sur les mêmes concepts que la datation au $^{14}C$, mais sans faire application des équations de datation. Le ratio ainsi calculé est désigné comme le "pMC" (percent Modern Carbon). Si le matériau à analyser est un mélange de biomatériau et de matériau fossile (sans isotope radioactif), alors la valeur de pMC obtenue est directement corrélée à la quantité de biomatériau présent dans l'échantillon. La norme ASTM D 6866-06 propose plusieurs techniques de mesure de la teneur en isotope $^{14}C$, basées soit sur la LSC (Liquid Scintillation Counting) spectrométrie à scintillation liquide, soit sur l'AMS/IRMS (Accelerated Mass Spectrometry couplé avec Isotope Radio Mass Spectrometry). La méthode de mesure préférentiellement utilisée dans le cas de la présente invention est la spectrométrie de masse décrite dans la norme ASTM D6866-06 ("accelerator mass spectroscopy").

Les textiles de l'invention contenant du polyamide 11 selon l'invention proviennent au moins en partie de matières premières bio-ressourcées et présentent donc une teneur en carbone bio-ressourcé d'au moins 1%, ce qui correspond à un ratio isotopique de $^{12}C/^{14}C$ d'au moins $1,2 \times 10^{-14}$. De préférence, les textiles selon l'invention comprennent au moins 50% en masse de carbone bio-ressourcé sur la masse totale de carbone, ce qui correspond à un ratio isotopique $^{12}C/^{14}C$ d'au moins $0,6.10^{-12}$. Cette teneur est avantageusement plus élevée, notamment jusqu'à 100%, qui correspond à un ratio isotopique $^{12}C/^{14}C$ de $1,2 \times 10^{-12}$. Les textiles selon l'invention peuvent donc comprendre 100% de carbone bioressourcé ou, au contraire, résulter d'un mélange avec une origine fossile.

Selon un mode de réalisation préféré, le textile selon l'invention est fabriqué à partir de PA11 ou le PA12, le polyamide présentant

- une différence, exprimée en valeur absolue, entre son acidité totale et sa basicité totale compris entre 35 et 180,

- une basicité totale strictement inférieure à 35 $\mu$eq/g et

- une acidité totale comprise entre 70 et 180 $\mu$eq/g,

le polyamide étant limité par un diacide carboxylique linéaire aliphatique en C6-C12, et de préférence par l'acide adipique.

Selon un autre mode de réalisation préféré, le textile selon l'invention est fabriqué à partir d'une composition comprenant du PA11 ou du PA12, le polyamide présentant

- une différence, exprimée en valeur absolue, entre son acidité totale et sa basicité totale compris entre 35 et 180, et

- une acidité totale strictement inférieure à 35 $\mu$eq/g et

- une basicité totale comprise entre 60 et 180 $\mu$eq/g,

le polyamide étant limité par un amine linéaire aliphatique et

au plus 10% en poids par rapport au poids total de la composition d'au moins un additif.

D'autres buts et avantages de la présente invention apparaîtront à la lecture des exemples suivants donnés à titre nullement limitatif.

EXEMPLES

Exemple 1 : Préparation des échantillons

Le polyamide selon l'invention noté A est un PA11 limité par de l'acide adipique (diacide en C6) à une teneur de 0.67% en poids par rapport à la quantité d'acide-11-amino undécanoïque chargé.

Ce polyamide est préparé selon le procédé suivant. L'acide-11-amino undécanoïque, l'eau et l'acide adipique sont chargés dans un réacteur, puis placés sous atmosphère inerte. Le milieu réactionnel est ensuite monté en température jusqu'à 235°C, tout en maintenant une agitation. Le milieu réactionnel est maintenu à 235°C, sous une pression de 20 bars pendant 1h30. Puis, la pression est descendue à 12 bar, tout en maintenant la température à 235°C. La matière est ensuite transférée dans un polymériseur, sous balayage d'azote à 235°C. La température est maintenue sous balayage d'azote pendant 1h30. La matière est ensuite extrudée, sous forme de granulés. Ce procédé est utilisé pour l'ensemble des polyamides exemplifiés.

Le polyamide selon l'invention noté B est un PA11 limité par de l'acide laurique (monoacide en C12) à une teneur de 1.10% en poids par rapport à la quantité d'acide-11-amino undécanoïque chargé.

Le polyamide selon l'invention noté C est un PA11 limité par la laurylamine (monoamine en C12) à une teneur de 0.83% en poids par rapport à la quantité d'acide-11-amino undécanoïque chargé.

Le polyamide selon l'invention noté D est un PA11 limité par la décanediamine (diamine en C10) à une teneur de 0.80% en poids par rapport à la quantité d'acide-11-amino undécanoïque chargé.

Le polyamide noté E est un PA1010 limité par l'excès d'acide décanedioïque ajouté à une teneur de 0.90% en poids par rapport à la somme des poids de la décanediamine et de l'acide décanedioïque à la stœchiométrie.

Le polyamide comparatif noté F est un PA11 commercialisé par la société Arkema France sous la dénomination commerciale Rilsan® BMNO.

Le polyamide comparatif noté G est un PA11 commercialisé par la société Arkema France sous la dénomination commerciale Rilsan® KNO.

Le polyamide noté H est un PA12 commercialisé par la société Arkema France sous la dénomination commerciale Rilsamid® AECNO.

Mesure de la viscosité inhérente

La viscosité inhérente est mesurée à une concentration en polyamide de 0,5% en poids en solution dans du métacrésol sur le poids total de la solution, à 20°C, au moyen d'un viscosimètre équipé d'un tube viscosimétrique Micro-Ubbelohde.

<u>Mesure de l'acidité totale</u>

L'acidité est mesurée selon la méthode suivante. 1g de polyamide est dissout dans 80 mL d'alcool benzylique à chaud. L'échantillon est ensuite refroidi. Puis, il est dosé par potentiométrie à l'aide d'un titrateur Metrohm (888 ou 716) avec une électrode combinée pH, par une solution d'hydroxyde de tétrabutylammonium à 0.02N. La courbe potentiel en fonction du volume donne un saut avec un volume équivalent à partir duquel, on calcule l'acidité totale grâce à la formule suivante :

$$\text{Acidité totale (meq/g)} = \frac{\text{Veq} \times [\text{TBAOH}]}{m}$$

dans laquelle

Veq désigne le volume équivalent obtenu grâce au dosage potentiométrique,
[TBAOH] désigne la concentration de la solution d'hydroxyde de tétrabutylammonium, c'est-à-dire 0,02 N,
m désigne la masse de l'échantillon, c'est-à-dire 1g.

<u>Mesure de la basicité totale</u>

La basicité est mesurée selon la méthode suivante. 1g de polyamide est dissout dans 80 mL de métacrésol à chaud. L'échantillon est ensuite refroidi. Puis, il est dosé par potentiométrie à l'aide d'un titrateur Metrohm (888 ou 716) avec une électrode combinée pH, par une solution d'acide perchlorique 0.02N dans de l'acide acétique. La courbe potentiel en fonction du volume donne un saut avec un Volume équivalent à partir duquel, on calcule la basicité totale, grâce à la formule suivante :

$$\text{Basicité totale (meq/g)} = \frac{\text{Veq} \times [\text{HClO4}]}{m}$$

dans laquelle

Veq désigne le volume équivalent obtenu grâce au dosage potentiométrique,
[HClO4] désigne la concentration de la solution d'acide perchlorique, c'est-à-dire 0,02 N,
m désigne la masse de l'échantillon, c'est-à-dire 1g.

<u>Calcul de la différence entre acidité et basicité totales</u>

La différence est obtenue par le calcul de la soustraction des valeurs entre l'acidité totale et la basicité totale, en valeur absolue, c'est-à-dire sans tenir compte du signe.
Par exemple, pour le PA 11 A :

$$\Delta = |103 - 18| = 85$$

Les valeurs de basicité et d'acidité totales pour les polyamides testés sont les suivantes :

| | Viscosité inhérente (m-crésol) | Acidité totale ($\mu$eq/g) | Basicité totale ($\mu$eq/g) | Différence |
|---|---|---|---|---|
| PA11 A (inv) | 0.98 | 103 | 18 | 85 |
| PA 11 B (inv) | 0.92 | 81 | 27 | 54 |
| PA11 C (inv) | 1.09 | 24 | 64 | 40 |
| PA11 D (inv) | 1.06 | 16 | 97 | 71 |
| PA1010 E (inv) | 1.04 | 127 | 23 | 104 |
| PA 11 F (comp) | 0.97 | 150 | **60** | 90 |

(suite)

|  | Viscosité inhérente (m-crésol) | Acidité totale ($\mu$eq/g) | Basicité totale ($\mu$eq/g) | Différence |
|---|---|---|---|---|
| PA 11 G (comp) | 1.40 | 44 | 46 | **2** |
| PA 12 H (inv) | 1.09 | 100 | 20 | 80 |

Exemple 2 : Analyse de la stabilité thermique

Les stabilités thermiques à chaud de polyamides selon l'invention et d'un polyamide comparatif sont analysées.

La viscosité à l'état fondu est évaluée dans les conditions suivantes :

Appareil : PHYSICA MCR301
Géométrie : plans parallèles de 25mm de diamètre
Températures : 220°C et 240°C
Fréquence : 10 rad.s$^{-1}$
Déformation : 5%
Durée : 30 minutes
Atmosphère : Balayage d'azote.

Ces conditions sont celles de la norme ISO 6721-10 : 1999.

Les résultats concernant la viscosité à 220°C sont reportés dans le tableau 2 suivant :

|  | Viscosité à t = 10 s (Pa.s$^{-1}$) | Viscosité à t = 1800 s (Pa.s$^{-1}$) | % d'évolution |
|---|---|---|---|
| PA11 A (inv) | 137 | 161 | 17.5 |
| PA 11 B (inv) | 94 | 121 | 28.7 |
| PA 11 C (inv) | 198 | 239 | 21 |
| PA 11 D (inv) | 165 | 206 | 25 |
| PA 11 F (comp) | 354 | 1920 | 442 |
| PA 12 H (inv) | 251 | 313 | 24.7 |

Les résultats concernant la viscosité à 240°C sont reportés dans le tableau 3 suivant :

|  | Viscosité à t = 10 s (Pa.s$^{-1}$) | Viscosité à t = 1800 s (Pa.s$^{-1}$) | % d'évolution |
|---|---|---|---|
| PA11 A (inv) | 83 | 102 | 23 |
| PA 11 B (inv) | 58 | 82 | 41 |
| PA 11 C (inv) | 122 | 159 | 30 |
| PA 11 D (inv) | 103 | 152 | 48 |
| PA 11 G (comp) | 723 | 1208 | 67 |
| PA 12 H (inv) | 153 | 208 | 36 |

Ces résultats montrent que le polyamide selon l'invention évolue très peu à chaud. Sa viscosité est pratiquement constante au cours du temps ; contrairement aux polyamides comparatifs, qui voient leur viscosité très nettement augmentée au cours du temps à 220°C et à 240°C.

Ces résultats montrent que le polyamide selon l'invention est parfaitement recyclable.

Exemple 3 : Analyse de la tenue thermique

Les tenues thermiques d'un polyamide selon l'invention et d'un polyamide comparatif ont été analysées.

La tenue thermique est évaluée dans les conditions suivantes. Les mesures sont réalisées sur l'appareil TG 209F1 Netzsch, de 25 à 550°C à 10 °C/min sous air et sous azote.

Les résultats sont reportés dans le tableau 4 suivant :

|  | Début de dégradation sous air en °C | Début de dégradation sous azote en °C |
|---|---|---|
| PA11 A (inv) | 434 | 437 |
| PA11 C (inv) | 439 | 442 |
| PA11 D (inv) | 436 | 446 |
| PA 11 F (comp) | 403 | 402 |

Ces résultats montrent que le polyamide selon l'invention présente une meilleure tenue thermique, que ce soit sous air ou bien sous azote.

Ces résultats indiquent que le filament fabriqué à partir d'un polyamide selon l'invention présentera de meilleures propriétés mécaniques, car il est beaucoup moins sensible à la température.

Exemple 4 : Analyse des propriétés d'allongement

Des haltères ont été réalisées selon la norme ISO 527 1A à partir des granulés des polyamides.

Des essais de traction à 23°C selon la norme ISO 527 1A : 2012 ont été réalisés. Le test consiste à appliquer une contrainte mécanique sur l'haltère. Le pourcentage d'allongement maximal de l'haltère est mesuré avant le second seuil.

Les résultats sont reportés dans le tableau 5 suivant :

|  | % d'allongement maximum avant le 2nd seuil |
|---|---|
| PA11 A (inv) | 270 |
| PA 11 B (inv) | 270 |
| PA 1010 E (inv) | 290 |
| PA11 F (Comp) | 250 |
| PA 11 G (comp) | 240 |

Ces résultats montrent que le polyamide selon l'invention présente des propriétés mécaniques à température ambiante meilleures que celles obtenues avec des polyamides comparatifs, ne répondant pas aux caractéristiques de basicité et d'acidité totales. Ces résultats permettent de conclure à la meilleure étirabillité et à la meilleure ténacité des filaments obtenus à partir du polyamide selon l'invention.

Exemple 5 : Caractérisation de la ténacité d'un filament de polyamide selon l'invention

Des filaments sont préparés à partir du polyamide selon l'invention PA11 A. La ténacité des filaments est mesurée selon la norme ISO 2062 à une vitesse de 250mm/min et 250mm en distance entre les deux mors.

Une valeur de 4.4 cN/dtex est obtenue pour une élongation de 22%.

Ainsi, des tissus fabriqués avec le polyamide selon l'invention peuvent être utilisés dans le domaine du sport.

Exemple 6 : Procédé de filage

Le PA11 A selon l'invention et le PA11 F comparatif ont été évalués en extrusion de multi-filaments. La ligne utilisée est caractérisée par :
Extrudeuse : 19 mm (3/4") L/D 30:1
Pompe : 0.6 cc/rev
Pack filière: 36 trous avec L/D=4; L= 1.4 mm et D= 0.35mm Profil de température en °C :

| Extrudeuse | Z1 | 230 |
|---|---|---|
|  | Z2 | 240 |
|  | Z2 | 250 |

(suite)

| Pompe | 260 |
|---|---|
| Conduite | 260 |
| Jaquette | 260 |

Le PA11 A selon l'invention permet l'obtention de multi-filaments sans difficultés grâce à sa fluidité et sa stabilité rhéologique. Le procédé est stable, sans casse de filaments et permet un excellent rendement.

En revanche, avec le PA11 F comparatif, le procédé est instable. Nous observons la formation d'une matière plus visqueuse en sortie de la filière générant la casse des multifilaments. En effet, du fait de sa réactivité en milieu fondu, le PA11 F comparatif évolue en viscosité au cours du procédé de filage et demande donc un ajustement en continu des paramètres d'extrusion afin de pallier ce problème. Cela n'est cependant pas viable d'un point de vue industriel.

Le PA11 F comparatif n'est donc pas adapté à la fabrication de multi filaments, alors que la formulation du PA11 A selon l'invention est tout particulièrement adaptée pour ce type de procédé de transformation.

**Revendications**

1. Polyamide aliphatique linéaire obtenu par polycondensation d'au moins un motif aliphatique linéaire choisi parmi un acide alpha,omega-aminocarboxylique en C6 à C12, un lactame en C6 à C12 et une unité (diamine en Ca).(diacide en Cb), avec a représentant le nombre d'atomes de carbone de la diamine et b représentant le nombre de carbone du diacide, a et b étant compris entre 4 et 18,

   le polyamide présentant

   - une différence, exprimée en valeur absolue, entre son acidité totale et sa basicité totale mesurées par potentiométrie

   compris entre 35 et 180 et

   - une basicité totale ou une acidité totale étant strictement inférieure à 35 $\mu$eq/g,

   lorsque la basicité totale est strictement inférieure à 35 $\mu$eq/g, alors l'acidité totale est comprise entre 70 et 180 $\mu$eq/g, ou
   lorsque l'acidité totale est strictement inférieure à 35 $\mu$eq/g, alors la basicité totale est comprise entre 60 et 180 $\mu$eq/g,
   le polyamide étant limité par un monoacide carboxylique linéaire aliphatique en C2-C18, une monoamine linéaire aliphatique en C4-C18, un diacide carboxylique linéaire aliphatique en C3-C36, et/ou une diamine linéaire aliphatique en C4-C18.

2. Polyamide selon la revendication 1, **caractérisé en ce qu'**il présente une viscosité inhérente comprise entre 0,70 et 1,70, avantageusement comprise entre 0,70 et 1,50, de préférence entre 0,80 à 1,20, plus particulièrement encore entre 0,85 et 1,15, la viscosité inhérente étant mesurée à une concentration en polyamide de 0,5% en poids en solution dans du métacrésol sur le poids total de la solution, à 20°C, au moyen d'un viscosimètre équipé d'un tube viscosimétrique Micro-Ubbelohde.

3. Polyamide selon la revendication 1 ou 2, **caractérisé en ce qu'**il est un homopolyamide.

4. Polyamide selon la revendication 3, **caractérisé en ce qu'**il est obtenu par polycondensation d'un motif aliphatique linéaire choisi parmi un acide alpha,omega-aminocarboxylique en C8 à C12, un lactame en C8 à C12 et une unité (diamine en Ca).(diacide en Cb), avec a représentant le nombre d'atomes de carbone de la diamine et b représentant le nombre de carbone du diacide, a et b étant compris entre 8 et 12.

5. Polyamide selon la revendication 4, **caractérisé en ce qu'**il est un PA11, PA12, PA1010, PA1012.

**6.** Procédé de préparation du polyamide tel que défini à l'une quelconque des revendications 1 à 5, **caractérisé en ce qu'**il comprend :

- une étape de mélange des monomères à l'étape fondu, et d'au moins un agent de terminaison de chaîne, d'eau,
- éventuellement une étape de filtration du mélange obtenu à l'étape précédente.

**7.** Composition comprenant majoritairement le polyamide tel que défini à l'une quelconque des revendications 1 à 5 et au moins un additif choisi parmi des ignifugeants, des agents protecteurs contre les UV, des stabilisants aux UV, des azurants optiques, des stabilisants thermiques, des pigments, des lubrifiants, des agents antioxydants, des agents d'amélioration de la fluidité, des agents d'amélioration de la coulabilité, des agents filmogènes, des charges, des auxiliaires de filmification, des gommes, des polymères semi-cristallins, des conservateurs, des agents anti-bactériens et leurs mélanges.

**8.** Utilisation du polyamide tel que défini à l'une quelconque des revendications 1 à 5 ou de la composition telle que définie à la revendication 7, pour la fabrication de matériau textile.

**9.** Filament constitué de polyamide tel que défini à l'une quelconque des revendications 1 à 5 ou de la composition telle que définie à la revendication 7.

**10.** Textile **caractérisé en ce qu'**il comprend le polyamide tel que défini à l'une quelconque des revendications 1 à 5 ou de la composition telle que définie à la revendication 7.

**Patentansprüche**

**1.** Lineares aliphatisches Polyamid, das durch Polykondensation von mindestens einer linearen aliphatischen Einheit erhalten wird, ausgewählt aus einer C6- bis C12-alpha,omega-Aminocarbonsäure, einem C6- bis C12-Lactam und einer (Ca-Diamin).(Cb-Disäure)-Einheit, wobei a die Anzahl der Kohlenstoffatome des Diamins darstellt und b die Anzahl der Kohlenstoffatome der Disäure darstellt und a und b zwischen 4 und 18 liegen, wobei das Polyamid aufweist:

- eine als Absolutwert ausgedrückte Differenz zwischen seinem Gesamtsäuregehalt und seiner Gesamtbasizität, potentiometrisch gemessen, von 35 bis 180 und
- eine Gesamtbasizität, die, oder ein Gesamtsäuregehalt, der strikt unter 35 $\mu$eq/g liegt,

wenn die Gesamtbasizität strikt unter 35 $\mu$eq/g liegt, dann liegt der Gesamtsäuregehalt zwischen 70 und 180 $\mu$eq/g, oder

wenn der Gesamtsäuregehalt strikt unter 35 $\mu$eq/g liegt, dann liegt die Gesamtbasizität zwischen 60 und 180 $\mu$eq/g,

wobei das Polyamid durch eine aliphatische lineare C2-C18-Monocarbonsäure, ein aliphatisches lineares C4-C18-Monoamin, eine aliphatische lineare C3-C36-Dicarbonsäure und/oder ein aliphatisches lineares C4-C18-Diamin begrenzt ist.

**2.** Polyamid nach Anspruch 1, **dadurch gekennzeichnet, dass** es eine inhärente Viskosität zwischen 0,70 und 1,70, vorteilhafterweise zwischen 0,70 und 1,50, vorzugsweise zwischen 0,80 und 1,20, noch mehr bevorzugt zwischen 0,85 und 1,15 aufweist, wobei die inhärente Viskosität bei einer Polyamidkonzentration von 0,5 Gew.-% der Lösung in Metakresol, bezogen auf das Gesamtgewicht der Lösung, bei 20 °C mittels eines Viskosimeters mit einem Micro-Ubbelohde-Viskosimeterrohr gemessen wird.

**3.** Polyamid nach Anspruch 1 oder 2, **dadurch gekennzeichnet, dass** es ein Homopolyamid ist.

**4.** Polyamid nach Anspruch 3, **dadurch gekennzeichnet, dass** es durch Polykondensation einer linearen aliphatischen Einheit erhalten wird, die aus einer C8-C12-alpha,omega-Aminocarbonsäure, einem C8-C12-Lactam und einer (Ca-Diamin).(Cb-Disäure)-Einheit ausgewählt ist, wobei a die Anzahl der Kohlenstoffatome des Diamins darstellt und b die Anzahl der Kohlenstoffatome der Disäure darstellt, wobei a und b zwischen 8 und 12 liegen.

**5.** Polyamid nach Anspruch 4, **dadurch gekennzeichnet, dass** es ein PA11, PA12, PA1010, PA1012 ist.

**6.** Verfahren zum Herstellen von Polyamid, wie in einem der Ansprüche 1 bis 5 definiert, **dadurch gekennzeichnet,**

**dass** es umfasst:

- einen Schritt des Mischens der Monomere in dem Schmelzschritt und mindestens eines Kettenabbruchmittels, Wasser,
- gegebenenfalls einen Schritt des Filtrierens des in dem vorherigen Schritt erhaltenen Gemischs.

7. Zusammensetzung, umfassend überwiegend Polyamid, wie in einem der Ansprüche 1 bis 5 definiert, und mindestens einen Zusatzstoff, der ausgewählt ist aus Flammenhemmstoffen, UV-Schutzmitteln, UV-Stabilisatoren, optischen Aufhellern, Wärmestabilisatoren, Pigmenten, Gleitmitteln, Antioxidationsmitteln, Fließverbesserern, Fließfähigkeitsverbesserern, Filmbildnern, Füllstoffen, Filmbildungshilfsmitteln, Kautschuken, teilkristallinen Polymeren, Konservierungsmitteln, antibakteriellen Mitteln und Gemischen davon.

8. Verwendung des Polyamids, wie in einem der Ansprüche 1 bis 5 definiert, oder der Zusammensetzung, wie in Anspruch 7 definiert, zur Herstellung von Textilmaterial.

9. Filament, bestehend aus Polyamid, wie in einem der Ansprüche 1 bis 5 definiert, oder aus der Zusammensetzung, wie in Anspruch 7 definiert.

10. Textil, **dadurch gekennzeichnet, dass** es das Polyamid, wie in einem der Ansprüche 1 bis 5 definiert, oder die Zusammensetzung, wie in Anspruch 7 definiert, umfasst.


**Claims**

1. A linear aliphatic polyamide obtained by polycondensation of at least one linear aliphatic unit chosen from a C6 to C12 alpha,omega-aminocarboxylic acid, a C6 to C12 lactam and a (Ca-diamine).(Cb-diacid) unit, with a representing the number of carbon atoms of the diamine and b representing the carbon number of the diacid, a and b being between 4 and 18, the polyamide having

   - a difference, expressed as an absolute value, between its total acidity and its total basicity, measured by potentiometry, of between 35 and 180, and
   - a total basicity or a total acidity being strictly less than 35 $\mu$eq/g,
   when the total basicity is strictly less than 35 $\mu$eq/g, then the total acidity is between 70 and 180 $\mu$eq/g, or
   when the total acidity is strictly less than 35 $\mu$eq/g, then the total basicity is between 60 and 180 $\mu$eq/g,
   the polyamide being limited by a linear aliphatic C2-C18 monocarboxylic acid, a linear aliphatic C4-C18 monoamine, a linear aliphatic C3-C36 dicarboxylic acid and/or a linear aliphatic C4-C18 diamine.

2. The polyamide according to claim 1, **characterized in that** it has an inherent viscosity of between 0.70 and 1.70, advantageously between 0.70 and 1.50, preferably between 0.80 and 1.20, even more particularly between 0.85 and 1.15, the inherent viscosity being measured at a polyamide concentration of 0.5 wt.% in solution in metacresol relative to the total weight of the solution, at 20°C, by means of a viscometer equipped with a Micro-Ubbelohde viscometer tube.

3. The polyamide according to claim 1 or 2, **characterized in that** it is a homopolyamide.

4. The polyamide according to claim 3, **characterized in that** it is obtained by polycondensation of a linear aliphatic unit chosen from a C8 to C12 alpha,omegaaminocarboxylic acid, a C8 to C12 lactam and a (Ca-diamine).(Cb-diacid) unit, with a representing the number of carbon atoms of the diamine and b representing the carbon number of the diacid, a and b being between 8 and 12.

5. The polyamide according to claim 4, **characterized in that** it is a PA11, PA12, PA1010, PA1012.

6. A method for preparing the polyamide as defined in any one of claims 1 to 5, **characterized in that** it comprises:

   - a step of mixing the monomers in the melt stage, and at least one chain terminator and water, and
   - optionally a step of filtering the mixture obtained in the preceding step.

7. A composition comprising predominantly the polyamide as defined in any one of claims 1 to 5 and at least one additive selected from flame retardants, UV protectants, UV stabilizers, optical brighteners, thermal stabilizers, pigments, lubricants, antioxidants, flow improvers, flowability improvers, film-forming agents, fillers, filming aids, gums, semi-crystalline polymers, preservatives, anti-bacterial agents and mixtures thereof.

8. A use of the polyamide as defined in any one of claims 1 to 5 or of the composition as defined in claim 7 for the manufacture of textile material.

9. A filament consisting of polyamide as defined in any one of claims 1 to 5 or of the composition as defined in claim 7.

10. A textile **characterized in that** it comprises the polyamide as defined in any one of claims 1 to 5 or the composition as defined in claim 7.